(19) Europäisches Patentamt
European Patent Office
Office européen des brevets

(11) Publication number: **0 255 625 B1**

# (12) EUROPEAN PATENT SPECIFICATION

(45) Date of publication of patent specification: **20.04.94**

(51) Int. Cl.5: **B01D 53/36**, B01J 23/84, B01J 23/89, B01J 23/78

(21) Application number: **87110139.0**

(22) Date of filing: **14.07.87**

## (54) A method for preparing rare earth metal catalysts with honeycomb-like alloy as supports.

(30) Priority: **30.07.86 CN 86105768**

(43) Date of publication of application:
**10.02.88 Bulletin 88/06**

(45) Publication of the grant of the patent:
**20.04.94 Bulletin 94/16**

(84) Designated Contracting States:
**DE FR GB**

(56) References cited:
**EP-A- 0 089 199**
**EP-A- 0 170 588**
**DE-A- 2 304 351**
**DE-A- 2 351 237**
**DE-A- 2 518 536**
**DE-A- 3 615 318**
**FR-A- 2 174 180**
**FR-A- 2 231 424**
**GB-A- 1 388 637**
**GB-A- 2 063 723**
**US-A- 3 867 313**
**US-A- 4 134 852**
**US-A- 4 261 862**

(73) Proprietor: **Beijing Polytechnic University**
**Jiu Long Shan East Suburb**
**Beijing(CN)**

Proprietor: **China National Machinery and Equipment Import and Export Corporation**
**16, Fu Xing Men Wai Street**
**Beijing(CN)**

(72) Inventor: **Jinghang, Xu**
**Room 602**
**Gate 4**
**Block 1**
**Shuangyushu Dong Li Beijing(CN)**

(74) Representative: **Goddar, Heinz J., Dr. et al**
**FORRESTER & BOEHMERT**
**Franz-Joseph-Strasse 38**
**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to a method for preparing rare earth metal catalysts with a honeycomb-like alloy as support and catalysts obtained thereby. More particularly , this invention relates to a quick coating-drying method for preparing rare earth metal catalysts with a honeycomb-like alloy as support and catalysts obtained thereby. The resulting catalysts are suitable for use in the purification of industrial waste gases , exhaust gases from automobiles as well as in the purification of air.

Much effort has been made in recent years in improving the performances of catalysts , reducing their cost and extending their useful life. In the known methods for preparing the catalysts , ceramic materials or high temperature-resisting aluminium-containing alloy materials are used as supports , noble metals are used as catalytic materials. However , because of the shortage of the noble metals and their high price , the resulting catalysts are rather expensive. Morever , in the preparation of wellknown rare earth metal catalysts , the supports generally include silica , ceramic compositions , natural silicious materials , alundum , silicon carbide, titania and zirconia etc., the catalysts are formed by impregnating the support structures with a solution of a mixture of rare earth metal salts , drying and calcining the impregnated supports. However, in such methods, the catalytic materials can not be coated firmly and uniformly onto the supports in strict stoichiometric proportions , therefore, the predetermined catalytic activity cannot be achieved. Other known methods for coating catalytic materials onto supports also comprise codeposition , chemical plating , spray drying, metallurgical consolidation , freeze drying , etc.. However , all these methods are unsatisfactory in one way or another , because they generally fail to coat the catalytic material onto the support in strict stoichiometric proportions.

From US 4 134 825 there is known a single phase mixed metal oxide - mechanically alloyed powder, wherein a high energy impact milling is used for the production thereof.

EP-A-0 089 199 discloses a rare earth metal pellet which is produced using an immersion method.

Thus , an object of the present invention is to provide a method for preparing perovskite or spinel structured rare earth metal catalysts with a honeycomb-like alloy as support , which is capable of overcoming the aforementioned drawbacks of the prior art.

Another object of the present invention is to provide a new method for coating catalytic materials onto the support, which is capable of coating the catalytic materials onto the support firmly and uniformly in stoichiometric proportions , forming desired chemical structures.

The present invention provides a method for preparing perovskite and spinel catalysts using rare earth metals comprising the following steps: coating a solution of a mixture of rare earth metal salts onto the surfaces of support tapes; drying said support tapes quickly; decomposing said rare earth metal salts; and oxidizing the rare earth metals into catalytic materials, characterized in that the supports are honeycomb-like alloys; the catalyst is firmly and uniformly carried onto the support according to a fixed proportion pursuant strictly to stoichiometry, and the catalytic materials are obtained having desired chemical structures specifically:

A. preparing an activated support tape from an alloy containing Fe-Cr-Al alloy or Ni-Cr-Al alloy by perforating intermittantly at distances of about 1.2 mm, from both top and bottom surfaces of the tape to form small holes with metal burrs, crimping the tape to form a corrugated tape with an amplitude of 1.0 mm to 2.0 mm and a distance between wave heights of between about 2 mm to 3 mm and subjecting the perforated and crimped tape to degreasing, acid etching, roughening and heat activation to form a protective layer of $\gamma$-$Al_2O_3$ on the surface of the tape;

B. coating a solution of a mixture of rare earth metal salts firmly and uniformly in stoichiometric proportions onto the surfaces of the support tape over a period of 0.5-30 sec;

C. drying the support tape at a temperature between 110 °C and 200 °C over not more than 120 sec.;

D. decomposing the rare earth metal salt or mixture coated on the support tape by heating at a temperature between 350 °C and 450 °C;

E. oxidizing the rare earth metal salts on the support tape into catalytic materials having chemical structures selected from the group consisting of $A_2BO_4$ and $ABO_3$, wherein in the $ABO_3$ structure, from 60% to 80% of the sites A (by gram atom ratio) are occupied by cations of light mixed rare earth metal or lanthanum 40% to 20% occupied by cations selected from the group consisting of strontium and calcium from 50% to 80% of the sites B (by gram atom ratio) are occupied by cations of iron and from 50% to 20% occupied by cations of metals selected from the group consisting of manganese, copper and nickel, and in the $A_2BO_4$ structure, from 70% to 90% of the sites A (by gram atom ratio) are occupied by cations of rare earth metals or lanthanum and from 30% to 10% occupied by cations of an alkaline earth metal selected from the group consisting of strontium and calcium from 50% to 80% of the sites B are occupied by cations of iron and from 50% to 20% occupied by cations of nickel; wherein the

oxidizing reaction is carried out at a temperature between 650 °C and 750 °C in the case of $ABO_3$ and between 800 and 850 °C in the case of $A_2BO_4$ for 1.0 - 1.5 hours;

F. shaping the support tape into structures with a honeycomb-like cross-section. The catalysts prepared by said method according to this invention have high catalytic activity, high temperature stability, high lead resistance and a long useful life

Figure 1 is a schematic process diagram for preparing the honeycomb-like alloy support tape of the present invention. Figure 2 is a schematic process diagram for preparing the catalysts of the present invention.

Figures 3 ,4 and 5 are curves for the purification of organic waste gases using the catalyst ($ABO_3$ crystal-type) of the present invention.

Figure 6 is a curve diagram showing the contrast between the catalytic activity of the catalyst ($ABO_3$ crystal-type ) in the present invention and that of a catalyst with 0.5 percent by weight of palladium.

Figure 7 is a curve diagram showing the contrast between the thermal stability of the catalyst ($ABO_3$ crystal-type ) in the present invention and that of a catalyst with 0.5 percent by weight of palladium.

Figure 8 is a curve diagram showing the contrast of the lead resistance of the catalyst B crystal-type ) in the present invention and that of a catalyst with 0.5 percent by weight of palladium.

Figure 9 is a curve diagram showing the efficiency for the purification of the total hydrocarbon (THC) in air contained in a steel bottle.

The support of the present invention is made of high-temperature resistant Fe-Cr-Al alloy or Ni-Cr-Al alloy strips of high resistivity. As shown in Figure 1 , the said alloy strips are rolled into long tapes with a width as required and a thickness of 0.05-0.12 mm , preferably 0.07-0.08 mm. The resulting long tapes are perforated at both surfaces so as to obtain long tapes with small holes having metal burrs , the penetration of which is more than or equal to 90%. Most of the said tapes are rolled into dimpled tapes (wave height is about 1.0-2.0 mm, and the distance between adjacent waves is about 2-3 mm). Finally, all the tapes are subjected to degreasing , acid etching and heat activating treatments , so as to form a r-$Al_2O_3$ protective layer on their surfaces.

In comparison with the metal supports in the prior art , the supports of the present invention have higher absorbability and higher specific surface area because of having small holes with metal burrs. Morever, during the heat treatment, metal bonds may be formed between the surfaces of the supports and the catalytic materials , so that the catalytic materials are firmly loaded onto the surfaces of the supports.

In addition , the high-temperature resistant supports of high resistivity used in the present invention can be energitised. After energitization , the surfaces of the supports can rapidly reach a temperature high enough to effect the catalytic reaction, whereby, a waste gas preheater is eliminated, and the cost of the catalytic purifying apparatus is reduced.

The catalytic materials used in the present invention are rare earth metal composite oxides having perovskite-type crystal structures ($ABO_3$) or spinel-type crystal structures ($A_2BO_4$). Generally , in the composite oxides having said two structures, the sites of A type are occupied by cations of the metals of atomic number 11-15, 56-71 or 89-103, and the sites of B type are occupied by ions of variable valence metals having ionic radii between about 0.04 nm (0.4 Å) and 0.14 nm (1.4 Å). In $ABO_3$ structures , the total of metal cations on sites of A type should be equal to the total of metal ions of variable valence on sites of B Type. In $A_2BO_4$ structures , the total of cations on sites of A Type should be equal to twice the total of cations of metals on sites of B Type. In said two structures , the total of charges of cations on sites of A Type and B Type should be equal to about the total of the charges of oxygen ions. In the composite oxides having $ABO_3$ structures according to the present invention, from 60% to 80% of the sites of A type are occupied by cations of mixed light rare earth metals or lanthanum, and from 40% to 20% of the sites of A Type are occupied by cations of strontium and calcium ; from 50% to 80% of the sites of B Type are occupied by cations or iron, and from 50% to 20% of the sites of B Type are occupied by cations of manganese and/or copper and/or nickel ; when lower initial temperatures of cataytic reaction and expected , small amounts of palladium may be used therein , i.e. , about 1% of the sites of B Type may be occupied by cations of palladium. In the composite oxides having $A_2BO_4$ structures according to the present invention, from 70% to 90% of the sites of A Type are occupied by cations of the mixed light rare earth metals or lanthanum , and from 30% to 10% of the sites of A Type are occupied by cations at strontium or calcium ; from 50% to 80% of the sites of B Type are occupied by cations of iron , and from 50% to 20% of the sites of B Type are occupied by cations of nickel.

The catalytic materials used in the present invention are formulated as follows:

$[RE_{(1-x)}Sr_x]\,[Fe_{(1-y)}Mn_y]\,O_3$ or,

$[La_{(1-x)}Sr_x][Fe_{1-y-\epsilon}Mn_yPd_\epsilon]O_3$

$$[Re_{(2-x_1-x_2)}Sr_{x_1}Ca_{x_2}][Fe_{(1-y_1)}Ni_{y_1}]O_4 \text{ or}$$

$$[La_{(2-x_1-x_2)}Sr_{x_1}Ca_{x_2}][Fe_{(1-y_1)}Ni_{y_1}]O_4,$$

wherein

$x = 0.2\text{-}0.4$, $y = 0.2\text{-}0.5$, $\epsilon = 0.01$

$x_1 = 0.1\text{-}0.3$, $X_2 = 0.1\text{-}0.3$, $y_1 = 0.2\text{-}0.5$.

In the present invention , since the composite oxides of rare earth metals as catalytic materials are relatively loose, and the surfaces of the supports have many small holes , to catalysts are similar to porous sound absorbing materials, sound wave will cause the air in the voids of the materials to vibrate and a friction of the sound wave with the walls of the voids will occur , so the sound energy is converted into thermal energy , and noise thereof is reduced. When several blocks of catalysts are placed in fixed intervals , a gas flow will be suddenly diffused while passing the honeycomb holes of one of the catalyst blocks , and as the gas flow passes the honeycomb holes of another catalyst block, diffusion will again occur. This accords with the principle of millipore amplify erasure, therefore the catalysts of the present invention have a function of sound erasure.

Now , the method for preparing a catalyst of the present invintion will be described more specifically with reference to the accompanying drawings.

The catalysts according to this invention can be prepared in a continuous manner by the use of the apparatus as shown in Figure 2. First , the wave-shaped support tape and the flat support tape rolled up respectively on shaft 1 and shaft 2 are run out simultaneously at fixed speed in the range of 1 to 2 m/ min , a layer of the solution of the said mixture is coated uniformly onto the support tapes while the two support tapes go through the fast coating tank 3 in the period of 0.5-30 sec.. If the primary amount of coating is not sufficient nor uniform , the two support tapes can be coated once more. Thereafter , the two support tapes are immediately led into a drying section 4 of the coating kiln at a temperature in the range of 110 °C to 200 °C, and generally , for less then 120 sec. After they come out from the section 4, they are led into a salts decomposing section 5 at a temperature in the range of 350 °C to 450 °C and subsequently into a primary oxidizing section 6 , wherein when the catalytic materials are of the $ABO_3$- Type crystal structures, the oxidizing temperature is from 650 °C to 750 °C , and when the catalytic materials are of the $A_2BO_4$-Type crystal structures, the oxidizing temperature is from 800 °C to 850 °C. Thereafter , the two support tapes coated with catalytic materials are rolled up on shaft 7 and shaft 8 respectively , or the two tapes may also be rolled up on one shaft (7 or 8 ). The resulting support tapes coated with catalytic materials are then formed into catalysts having desired shapes and sizes , and then the shaped catalysts blocks 12 are discharged into carriage 13 which passes a preheating section 15 in a period of about 30 minutes at a temperature in the range of 350 °C to 450 °C , an oxidizing section 16 in a period of about 90 minutes in the same temperature range as of the primary oxidizing section 6 , and a cooling section 17 in a period of about 30 minutes. Alternatively , after the salts decomposing, the support tapes loaded with catalytic materials may pass a long oxidizing section directly for a period of about 60 minutes. After having been cooled , the resulting tapes are formed into catalysts as desired.

The catalysts prepared by above-said method according to this invention have advantages of high catalytic activity, low cost and long useful life.

Example 1.

Preparation of Activated Support Tapes

As shown in Figure 1 , a Fe-Cr-Al alloy (OCr21Al6) strip with a thickness of 1.0 mm is rolled several times with a two-high mill (1) and a four-high mill (2) so as to attain a thickness of 0.07-0.08 mm. The composition of the said Fe-Cr-Al alloy is as follows (by weight) : Cr: 21-24%, Al: 6.5-7.5%, rare earth metal: 0.03% , Ti: 0.15%, Co: 0.5%, C 0.06%, Si 0.06%, Mn 0.06%, S 0.03% , p 0.03%, the balance is Fe. The said Fe-Cr-Al alloy has the following features : the maximum operating temperature is up to 1200 °C , the coefficient of elongation is larger than or equal to 12% , the cold bend for 90 is running more than or equal to 5 times , the specific resistance is 1.4 0.1 $mm^2$ /M , the annealing temperature is 800±20 °C. Thereafter , the resulting metal tapes are performated with perforator (3) so that they have small holes having metal

burrs on their two surfaces (for example, the size of the hole is about 0.4X 0.4 mm, hole interval is about 1.2mm ) , wherein the penetration of the holes is more than or equal to 90%. Part of the resulting tapes are rolled with a dimpling machine (4 ) (wave distance between adjacent waves is about 3 mm , wave height is about 1.1-1.7mm). Thereafter, all the resulting alloy tapes are subjected to the following treatments so as to form an oxide layer on the surfaces, the said treatments include ( a ) removing grease with a degreasing agent (7 ) in degreasing tank (6 ) at 50 ° C , (b ) washing with water in water washing tank (8), (c) acid etching in acid etch tank (9) with 38% of industrial hydrochloric acid for about 5-8 minutes , (d) water washing in water washing tank (10 ), (e) cleaning with deionized water 912 ) in ultrasonic cleaner (11 ) , and (f) activating in activating kiln (13) at a temperature in the range of 650-750 ° C, the abovementioned treatments are carried out continuously.

Example 2.

Preparation of Catalysts

234.8 grams of lanthanum nitrate , 63.49 grams Of strontium nitrate , 318.93 grams of iron nitrate, 35.79 grams of manganese nitrate and 2.30 grams of palladium nitrate are dissolved in water and mixed up homogeneously to form 2000ml or mixed solution. The obtained mixed solution is charged into tank (3) of the fast coating apparatus as shown in Figure 2. First , the drying section of the fast coating kiln is controlled at a temperature in the range of 110-200 ° C, the salts decomposing section of the fast coating kiln is controlled at a temperature in the range of 650-750 ° C. Thereafter , the activated supports having two different shapes prepared according to Example 1 are simultaneously fed out of a shaft 1 and shaft 2 , and they pass through the fast coating apparatus at a fixed speed in the range of 1-2m/min., wherein the coating duration is about 0.5-30 s. and then the coated support tapes pass through the drying section , the salts composing section and the primary oxidizing section. Afterwards , the resulting support tapes having two different shapes are rolled upon one shaft (7 or 8 ) so as to form catalysts having desired shapes. The shaped catalysts are discharged into carriage (13 ), which passes through the oxidizing kiln to oxidize the catalysts at a temperature in the range of 650-750 ° C for about 1.5 hours. Finally , 4-5 kg of the catalyst with $[La_{0.7}Sr_{0.3}]$. $[Fe_{0.79}Mn_{0.2}Pd_{0.01}]$ $O_3$ as catalytic material can be obtained, wherein the catalytic material is about 7-8 percent by weight of the total catalyst.

The suitability and purifying efficiency of this catalyst are shown in Figures 3 , 4 and 5. The contrast curves for this catalyst and a catalyst with noble metal palladium as catalytic material on the same kind of support ) are shown in Figures 6 ,7 and 8. The effect performed by this catalyst on purifying air contained in a steel bottle is shown in Figure 9. The space velocity character and acoustic absorption coefficient are shown in tables 1 and 2.

Example 3.

98.0 grams of mixed light rare earth metals is dissolved in 100 ml of nitric acid to form a solution. 84.65 grams of strontium nitrate , 238.7 grams of iron nitrate , 35.79 grams of manganese nitrate and 37.51 grams of copper nitrate are dissolved in water to form a solution. Thereafter , the above two solutions are mixed together and form 2000 ml of mixed solution. The resulting mixed solution is charged into the coating tank (3) of the fast coating apparatus. 4 kg of catalyst with $[RE_{0.6}Sr_{0.4}]$ $[Fe_{0.6}\ Mn_{0.2}Cu_{0.2}]$ $O_3$ as catalytic material can be obtained by using the method as described in Example 2.

The catalyst as prepared above has good effect in the purification and noise elimination of a automibile waste gases. Experiment proves that this catalyst has a useful life exceeding 58 , 000 km. The data contrast between automobile waste gases purifier (HF-type ) using the catalyst of the present invention and the original muffler for the same car are shown in Tables 3 and 4.

Example 4.

454.90 grams of lanthanum nitrate , 63.49 grams of strontium nitrate , 49 ,22 grams of calcium nitrate , 242 ,27 grams of iron nitrate and 73.08 grams of nickel nitrate are dissolved in water to form 2500 ml of mixed solution. The resulting mixed solution is charged into the coating tank (3 ) of the fast coating apparatus, 5 kg of catalysts with $[La_{1.4}Sr_{0.3}Ca_{0.3}][Fe_{0.6}Ni_{0.4}]$ $O_4$ as catalytic material can be obtained by using the same method and under the same condition as described in Example 2 except that the oxidizing temperature is from 800 ° C to 850 ° C.

When this catalyst is used in the purification of waste gases containing 100 ppm of NOx, under conditions of space velocity: 10000 $h^{-1}$ , and temperature: 300 °C, the waste gases can be purified to contain less than 0.6 ppm of NOx.

The above-mentioned catalysts may be formed into various shapes and sizes as desired.

The overall characteristics of the catalysts of the present invention is shown in Table 5.

The catalysts prepared by the method according to the invention can be regenerrated when they become less active. The regeneration test results are shown in Table 6. The test results show that the catalysts can be regenerated by different methods according to the cause of their activity reduction, and when the catalysts is completely inactive, their supports may be used again.

ILLUSTRATION OF DRAWINGS

1. In Figure 1.

| | |
|---|---|
| (1). | two-high mill |
| (2). | four-high mill |
| (3). | perforator |
| (4). | dimpling machine |
| (5). | shaft |
| (6). | degreasing tank |
| (7). | degreasing agent |
| (8). | water washing tank |
| (9). | acid etching tank |
| (10). | water washing tank |
| (11). | ultrasonic cleaner |
| (12). | deionized water |
| (13). | activating kiln |

2. In Figure 2.

| | |
|---|---|
| 1,2,7,8, | shaft; |
| 3, | fast coating tank; |
| 4, | drying section of the coating kiln; |
| 5, | salts decomposing section of the coating kiln; |
| 6, | oxidizing section of the coating kiln; |
| 9, | fan; |
| 10, | $NO_x$ purifier; |
| 11, | shaping section; |
| 12, | shaped catalyst blocks; |
| 13, | carriage; |
| 14, | rail; |
| 15, | preheating section; |
| 16, | oxidizing section; |
| 17, | cooling section; |

3. In Figures 3. and 5.

Space velocity: 10000 h -1;

| Organic compound and concentrions: | | |
|---|---|---|
| 1. | N-hexane | 9065 ppm |
| 2. | isooctane | 8565 ppm |
| 3. | cyclohexene | 5279 ppm |
| 4. | glacial acetic acid | 5232 ppm |
| 5. | formaldehyde | 5000 ppm |
| 6. | cyclohexanone | 6855 ppm |
| 7. | ethanol | 5476 ppm |
| 8. | n-butanol | 10000 ppm |
| 9. | ethyl acetate | 4870 ppm |
| 10. | benzene | 10000 ppm |
| 11. | cresol | 6807 ppm |
| 12. | pyridine | 600 ppm |
| 13. | acetonitrile | 6011 ppm |
| 14. | carbon monoxide | 9300 ppm |

4. In Figure 6.

A: ABO3-type catalyst of the present invention
B: catalyst with 0.5% palladium
concentration of propene in waste gas: 10000 ppm space velocity: 10000 h-1

5. In Figure 7.

A: ABO3-type catalyyst of the present invention
B: catalyst with 0.5% palladium;
thermal stability means the variation of purifying efficiency of propene after the catalyst was impacted by gas flow at 800 C for 2 hours. Concentration of propene in waste gases is 10000 ppm, and space velocity is 10000 h-1,

6. In Figure 8.

A: ABO3-type catalyst of the present invention
B: catalyst with 0.5% palladium.
Lead resistance means the variation of purifying efficiency of propene after the catalyst is poisoned by lead.
Concentration of propene in waste gasses is 10000 ppm, space velocity is 10000 h-1

7. In Figure 9.

Concentration of THC in air contained in steel bottle is 57 ppm, space velocity is 3500 $h^{-1}$.

Table 1. space velocity character contrastion

| Propylene purifying efficiency (%) | | | | | | | | |
|---|---|---|---|---|---|---|---|---|
| catalyst | catalyst of the present invention | | | | catalyst with 0.1% by weight of Pd | | | |
| inlet temperature(℃) | 200 | 300 | 400 | 500 | 200 | 300 | 400 | 500 |
| waste gas space velocity($h^{-1}$) | | | | | | | | |
| 40000 | 9.7 | 87.5 | 82.4 | 87.2 | 21.5 | 56.6 | 72.0 | 79.2 |
| 30000 | 22.9 | 93.3 | 92.9 | 91.2 | 38.0 | 54.7 | 79.7 | 89.4 |
| 20000 | 58.2 | 100 | 92.9 | 97.9 | 54.0 | 54.0 | 87.5 | 93.3 |
| 10000 | 66.7 | 100 | 99.4 | 100 | 70.0 | 73.6 | 100 | 100 |
| 5000 | 64.0 | 100 | 100 | 100 | 78.5 | 90.7 | 100 | 100 |

Note: the waste gas contains 1% of $C_3H_6$ and 0.2% of CO.

Table 2. acoustic absorption coefficient of catalysts

| sample | wave height (mm) | air thickness (mm) | acoustic frequency (Hz) | | | | | | |
|---|---|---|---|---|---|---|---|---|---|
| | | | 125 | 250 | 500 | 1000 | 1800 | 2000 | 4000 |
| ϕ98mm, thickness 0.07 mm, dimpled sheet | 1.7 | --- | 0.09 | 0.07 | 0.09 | 0.09 | -- | 0.34 | 0.55 |
| ϕ98mm × 50mm catalyst having honeycomb shape | 1.1 | 2.1 | 0.09 | 0.12 | 0.21 | 0.42 | 0.44 | | |
| | 2.0 | 1.5 | 0.09 | 0.18 | 0.25 | 0.48 | 0.54 | | |
| | 2.3 | 0.7 | 0.10 | 0.13 | 0.21 | 0.43 | 0.53 | | |

Table 3. results of plateform test of BJ-492 engine *

| item | | working state at constant speed (km/hr) | | | | | | | |
|---|---|---|---|---|---|---|---|---|---|
| | | idle speed | 20 | 30 | 40 | 50 | 60 | 70 | aver- age |
| effective power (kW) | original engine+hollow pipe | -- | 3,072 | 5,048 | 7,763 | 11,34 | 15,51 | 21,46 | 10,71 |
| | original engine+muffler | -- | 3,087 | 5,041 | 7,770 | 11,24 | 15,72 | 21,25 | 10,69 |
| | original engine+purifier | 0,2237 | 3,042 | 5,063 | 7,740 | 11,09 | 16,06 | 21,23 | 10,70 |
| gas flow resist- ance/Pa (mmH$_2$O) | front and back of muffler | (12.0) 117.7 | (17.5) 171.7 | (21.5) 210.9 | (33.5) 328.6 | (68.0) 667.0 | (104.0) 1020 | (186.0) 1825 | (63.2) 620.0 |
| | front and back of purifier | (25) 245.3 | (4.0) 39.24 | (10.5) 103.0 | (14.5) 142.2 | (32.5) 318.8 | (63.0) 618.0 | (110.0) 1079 | (33.9) 332.6 |
| specific feul con- sumption (g/kWh) | original engine+hollow pipe | -- | 585 | 493 | 421 | 386 | 373 | 385 | 440 |
| | original engine+muffler | -- | 581 | 504 | 424 | 384 | 373 | 381 | 441 |
| | original engine+purifier | 5184 | 574 | 496 | 414 | 396 | 373 | 381 | 439 |

(turn to next page)

(Follow last Page)

| | | | | | | | | | |
|---|---|---|---|---|---|---|---|---|---|
| concentration of CO in exhaust (%) | front of Purifier | 5.05 | 3.5 | 4.3 | 1.7 | 1.7 | 2.4 | 2.3 | 3.0 |
| | back of Purifier | 0.47 | 0.05 | 1.8 | 0.05 | 0.5 | 1.1 | 1.8 | 0.8 |
| concentration of HC in exhaust (ppm) | front of Purifier | 6850 | 1100 | 350 | 205 | 200 | 180 | 200 | 1298 |
| | back of Purifier | 1160 | 0 | 150 | 50 | 100 | 100 | 100 | 237 |
| concentration of $NO_x$ in exhaust ($mg/m^3$) | front of Purifier | 47.2 | 431 | 119 | 88 | 117 | 115 | 85 | 143 |
| | back of Purifier | 6.6 | 168 | 95 | 40 | 93 | 69 | 96 | 81 |

(Turn to next Page)

(Follow last Page)

| | | | | | | | | | |
|---|---|---|---|---|---|---|---|---|---|
| noise | original engine+hollow Pipe | 113 | 114 | 117 | 123 | 126 | 131 | 136 | 123 |
| | original engine+muffler | 66 | 70 | 72 | 78 | 82 | 88 | 89 | 78 |
| dB(A) | original engine+purifier | 62 | 65 | 68 | 70 | 74 | 80 | 82 | 76 |

* HF-Type of Purifier contains 1.7l of catalyst having $ABO_3$-Type, feul is a gasline containing lead.

Table 4. The contrast results between automible waste gases purifier (HF-Type) (乙) using the catalyst of the present invention and original muffler (甲)

| model of automibles | model of purifier | effect of purifying CO at idle speed | | effect of purifying HC at idle speed | | noise from outside of automible | time of acceleration of the engine | | effect of reduction of feul consumption | |
|---|---|---|---|---|---|---|---|---|---|---|
| | | concentration (%) 甲/乙 | efficiency of purification (%) | concentration (ppm) 甲/乙 | efficiency of purification (%) | dB(A) 甲/乙 | 25/60 (km/hr) 甲/乙 | 15/70 (km/hr) 甲/乙 | feul consumption l/100km 甲/乙 | reduction of feul consumption (%) |
| BJ-130 (light truck) | HF-1 | 6.8/0.9 | 86.8 | 1626/100 | 93.8 | 81.3/79.4 | 20.9/19.7 | 28.4/28.3 | — | — |
| BJ-212 (Jeep) | HF-1 | 2.4/0.28 | 90.4 | 2000/145 | 92.8 | 79.3/80.0 | 13.1/11.6 | 12.2/16.1 | 10.3/9.55 | 7.3 |
| TJSF travelling car | HF-1 | 6.2/0.13 | 97.9 | 1000/ | 86.2 | 76.7/76.2 | 23.3/23.1 | 28.4/28.6 | — | — |
| WU HAN 121(Jeep) | HF-1 | 5.94/0.02 | 99.0 | 4000/115 | 97.1 | 79.8/77.3 | 17.1/17.1 | 21.1/20.4 | 13.3/12.1 | 9.0 |
| WU HAN 121(Jeep) | HF-2 | 5.4/1.0 | 81.5 | 2300/450 | 80.4 | 85.8/84.6 | — | — | — | — |
| Jie Fang CA-10C (truck) | HF-3 | 0.22/0.06 | 72.7 | 530/20 | 86.8 | 90.0/84.5 | 19.8/19.5 | 30.2/31.1 | — | — |
| CA-653 travelling car | HF-4 | 4.22/0.05 | 98.7 | 1020/955 | 90.6 | 88.4/79.8 | 43.6/39.6 | 57.8/52.2 | 29.5/28.4 | 3.7 |

Table 5.

| characteristics | unit | index | |
|---|---|---|---|
| | | used for purification of industral waste gases | used for purification of automible waste gases |
| exterior sizes | mm | 200 × 200 × 50<br>250 × 200 × 50 | ϕ 120 × 25<br>ϕ 150 × 25 |
| hole surface area | $mm^2$ | 2.7 | 2.3 |
| hole wall thinkness | mm | 0.05~0.12 | 0.05~0.12 |
| free section surface | % | 88~92 | 85~88 |
| specific weight | kg/L | 0.5~0.6 | 0.75~0.85 |
| parts by weight of catalytic material in the catalyst | % | 7~8 | 7~8 |

Table 6. Results of Regeneration Test of Catalysts

| cause of activity reduction | methods for regeneration | original activity | | remaining activity of the catalysts to be re-generated | | activity after regeneration | |
|---|---|---|---|---|---|---|---|
| | | t50% (℃) | t90% (℃) | t50% (℃) | t90% (℃) | t50% (℃) | t90% (℃) |
| dust pollution | washing with 1% of wash liquid, and then drying | 214 | 365 | 260 | 477 | 216 | 260 |
| fired at 700 °C for 2 hours (without air flow) | reactivating with gas flow at 450 ℃ for 2 hours | 190 | 420 | 342 | 590 | 190 | 410 |

(Turn to next page)

(Follow last page)

| | | | | | | | |
|---|---|---|---|---|---|---|---|
| deposite of carbon | firing carbon in presence of air at 500 ℃ for 2 hours | 290 | 393 | 370 | 560 | 370 | 560 |
| | firing carbon in presence of air at 500 ℃ for 24 hours | 290 | 393 | 370 | 560 | 300 | 398 |
| | firing carbon in presence of air at 650 ℃ for 2 hours | 270 | 420 | 290 | 441 | 270 | 421 |
| loss of catalytic material | washing with 1% of wash liquid, and then drying; coating catalytic material according to original composition | 224 | 350 | 432 | 605 | 216 | 350 |

## Claims

1. A method for preparing perovskite and spinel catalysts using rare earth metals comprising the following steps: coating a solution of a mixture of rare earth metal salts onto the surfaces of support tapes; drying said support tapes quickly; decomposing said rare earth metal salts; and oxidizing the rare earth metals into catalytic materials, characterized in that the supports are honeycomb-like alloys; the catalyst is

firmly and uniformly carried onto the support according to a fixed proportion pursuant strictly to stoichiometry, and the catalytic materials are obtained having desired chemical structures, specifically:

A. preparing an activated support tape from an alloy containing Fe-Cr-Al alloy or Ni-Cr-Al alloy by perforating intermittantly at distances of about 1.2 mm from both top and bottom surfaces of the tape to form small holes with metal burrs, crimping the tape to form a corrugated tape with an amplitude of 1.0 mm to 2.0 mm and a distance between wave heights of between about 2 mm to 3 mm and subjecting the perforated and crimped tape to degreasing, acid etching, roughening and heat activation to form a protective layer of $\gamma$-$Al_2O_3$ on the surface of the tape;

B. coating a solution of a mixture of rare earth metal salts firmly and uniformly in stoichiometric proportions onto the surfaces of the support tape over a period of 0.5-30 sec;

C. drying the support tape at a temperature between 110°C and 200°C over not more than 120 sec.;

D. decomposing the rare earth metal salt or mixture coated on the support tape by heating at a temperature between 350°C and 450°C;

E. oxidizing the rare earth metal salts on the support tape into catalytic materials having chemical structures selected from the group consisting of $A_2BO_4$ and $ABO_3$, wherein in the $ABO_3$ structure, from 60% to 80% of the sites A (by gram atom ratio) are occupied by cations of light mixed rare earth metal or lanthanum 40% to 20% occupied by cations selected from the group consisting of strontium and calcium from 50% to 80% of the sites B (by gram atom ratio) are occupied by cations of iron and from 50% to 20% occupied by cations of metals selected from the group consisting of manganese, copper and nickel; and in the $A_2BO_4$ structure, from 70% to 90% of the sites A (by gram atom ratio) are occupied by cations of rare earth metals or lanthanum and from 30% to 10% occupied by cations of an alkaline earth metal selected from the group consisting of strontium and calcium from 50% to 80% of the sites B are occupied by cations of iron and from 50% to 20% occupied by cations of nickel; wherein the oxidizing reaction is carried out at a temperature between 650°C and 750°C in the case of $ABO_3$ and between 800 and 850°C in the case of $A_2BO_4$ for 1.0 - 1.5 hours;

F. shaping the support tape into Structures with a honeycomb-like cross-section.

**2.** The method of claim 1, wherein said catalyst shaping is carried out prior to the oxidising step.

**3.** Use of the catalyst, prepared with the method of one of claims 1 to 2, in the purification of industrial waste gases, exhaust gases from automobiles and air.

## Patentansprüche

**1.** Ein Verfahren zur Herstellung von Perovskit- und Spinell-Katalysatoren unter Verwendung von Seltenerdmetallen, welches die folgenden Schritte umfasst: Aufbringen einer Lösung einer Mischung von Seltenerdmetallsalzen auf die Oberflächen von Trägerbändern; schnelles Trocknen besagter Trägerbänder; Zersetzen besagter Seltenerdmetallsalze; und Oxidieren der Seltenerdmetalle zu katalytischen Materialien, dadurch gekennzeichnet, daß die Trägermaterialien honigwabenförmige Legierungen sind; der Katalysator einem feststehenden Anteil streng gemäß Stöchiometrie, entsprechend fest und gleichförmig auf dem Träger gehalten wird und die katalytischen Materialien so erhalten werden, daß sie gewünschte chemische Strukturen aufweisen, insbesondere:

A. Herstellung eines aktivierten Trägerbandes aus einer Legierung, die Fe-Cr-Al-Legierung oder Ni-Cr-Al-Legierung enthält, durch intermittierendes Perforieren in Abständen von etwa 1,2 mm sowohl von den Ober- als auch von den Unterflächen des Bandes, um kleine Löcher mit Metallgraten zu bilden, Falten des Bandes, um ein gewelltes Band mit einer Amplitude von 1,0 mm bis 2,0 mm und einem Abstand zwischen den Wellenbergen von zwischen etwa 2 mm bis 3 mm zu bilden, und Unterwerfen des perforierten und gefalteten Bandes unter Entfettung, Säureätzung, Anrauhung und Hitzeaktivierung, um eine Schutzschicht aus $\gamma$-$Al_2O_3$ auf der Oberfläche des Bandes zu bilden;

B. Aufbringen einer Lösung einer Mischung von Seltenerdmetallsalzen fest und gleichmäßig in stöchiometrischen Verhältnissen auf die Oberflächen des Trägerbandes über einen Zeitraum von 0,5-30 s;

C. Trocknen des Trägerbandes bei einer Temperatur zwischen 110°C und 200°C über nicht mehr als 120 s;

D. Zersetzen des Seltenerdmetallsalzes oder der Mischung, das die auf das Trägerband aufgebracht ist, durch Erhitzen bei einer Temperatur zwischen 350°C und 450°C;

E. Oxidieren der Seltenerdmetallsalze auf dem Trägerband zu katalytischen Materalien mit chemischen Strukturen, die ausgewählt sind aus der Gruppe, die aus $A_2BO_4$ und $ABO_3$ besteht, wobei in der $ABO_3$-Struktur von 60% bis 80% der Stellen A (nach Grammatom-Verhältnis) von Kationen von leichtem Mischseltenerdmetall oder Lanthan besetzt sind, 40% bis 20% von Kationen besetzt sind, die ausgewählt sind aus der Gruppe, die aus Strontium und Calcium besteht, von 50% bis 80% der Stellen B (nach Grammatom-Verhältnis) von Eisen-Kationen besetzt sind und von 50% bis 20% von Kationen von Metallen besetzt sind, die ausgewählt sind aus der Gruppe, die aus Mangan, Kupfer und Nickel besteht, und in der $A_2BO_4$-Struktur von 70% bis 90% der Stellen A (nach Grammatom-Verhältnis) von Kationen von Seltenerdmetallen oder Lanthan besetzt sind und von 30% bis 10% von Kationen eines Erdalkalimetalles besetzt sind, das ausgewählt ist aus der Gruppe, die aus Strontium und Calcium besteht, von 50% bis 80% der Stellen B von Eisen-Kationen besetzt sind und 50% bis 20% von Nickel-Kationen besetzt sind, wobei die Oxidationsreaktion durchgeführt wird bei einer Temperatur zwischen 650 °C und 750 °C im Fall von $ABO_3$ und zwischen 800 °C und 850 °C im Fall von $A_2BO_4$ für 1,0-1,5 Stunden;

F. Ausformen des Trägerbandes zu Strukturen mit einem honigwabenförmigen Querschnitt.

**2.** Das Verfahren nach Anspruch 1, wobei besagte Katalysatorausformung vor dem Oxidationsschritt durchgeführt wird.

**3.** Verwendung des Katalysators, der mit dem Verfahren nach einem der Ansprüche 1 bis 2 hergestellt ist, in der Reinigung von industriellen Abgasen, Abgasen aus Automobilen und Luft.

**Revendications**

**1.** Procédé pour préparer des catalyseurs du type perovskite et spinelle utilisant des métaux des terres rares comprenant les étapes suivantes : appliquer une solution d'un mélange de sels de métaux des terres rares sur les surfaces de bandes de support ; sécher rapidement lesdites bandes de support ; décomposer lesdits sels de métaux des terres rares ; et oxyder les métaux des terres rares en matières catalytiques, caractérisé en ce que les supports sont des alliages en forme de nid d'abeilles ; le catalyseur est supporté fermement et uniformément sur le support selon une proportion fixe strictement conforme à la stoechiométrie, et les matières catalytiques obtenues ont des structures chimiques souhaitées, spécifiquement comme suit :

A. préparer une bande de support activée à partir d'un alliage contenant un alliage Fe-Cr-Al ou un alliage Ni-Cr-Al par perforation par intervalles à des distances d'environ 1,2 mm à partir des deux surfaces supérieure et inférieure de la bande pour former de petits trous ayant des barbes métalliques, gaufrage de la bande pour former une bande ondulée avec une amplitude de 1,0 mm à 2,0 mm et une distance entre crêtes d'ondulation d'environ 2 mm à 3 mm et traitement de la bande perforée et ondulée par dégraissage, attaque acide, dépolissage et activation à la chaleur pour former une couche protectrice de $\gamma$-$Al_2O_3$ sur la surface de la bande ;

B. appliquer fermement et uniformément une solution d'un mélange de sels de métaux des terres rares en proportions stoechiométriques sur les surfaces de la bande de support en une période de 0,5 à 30 secondes ;

C. sécher la bande de support à une température comprise entre 110 °C et 200 °C en une période d'au plus 120 secondes ;

D. décomposer le sel ou mélange de sels de métaux des terres rares déposé sur la bande de support par chauffage à une température comprise entre 350 °C et 450 °C ;

E. oxyder les sels de métaux des terres rares sur la bande de support pour les transformer en matières catalytiques ayant des structures chimiques choisies dans le groupe formé par $A_2BO_4$ et $ABO_3$, où, dans la structure $ABO_3$, 60 % à 80 % des sites A (en rapport en atomes-grammes) sont occupés par des cations de métal de terres rares mixtes légères ou de lanthane, 40 % à 20 % sont occupés par des cations choisis dans le groupe formé par le strontium et le calcium, 50 % à 80 % des sites B (en rapport en atomes-grammes) sont occupés par des cations de fer et 50 % à 20 % sont occupés par des cations de métaux choisis dans le groupe formé par le manganèse, le cuivre et le nickel, et, dans la structure $A_2BO_4$, 70 % à 90 % des sites A (en rapport en atomes-grammes) sont occupés par des cations de métaux des terres rares ou de lanthane et 30 % à 10 % sont occupés par des cations d'un métal alcalino-terreux choisi dans le groupe formé par le strontium et le calcium ; 50 % à 80 % des sites B sont occupés par des cations de fer et 50 % à 20 % sont occupés par des cations de nickel ; la réaction d'oxydation étant conduite à une température

comprise entre 650 ° C et 750 ° C dans le cas de $ABO_3$ et entre 800 et 850 ° C dans le cas de $A_2BO_4$ pendant 1,0 à 1,5 heures ;
F. façonner la bande de support sous forme de structures à section transversale en nid d'abeilles.

**2.** Procédé selon la revendication 1, dans lequel ledit façonnage du catalyseur est effectué avant l'étape d'oxydation.

**3.** Utilisation du catalyseur, préparé par le procédé de l'une des revendications 1 et 2, dans la purification de gaz résiduaires industriels, de gaz d'échappement d'automobiles et d'air.

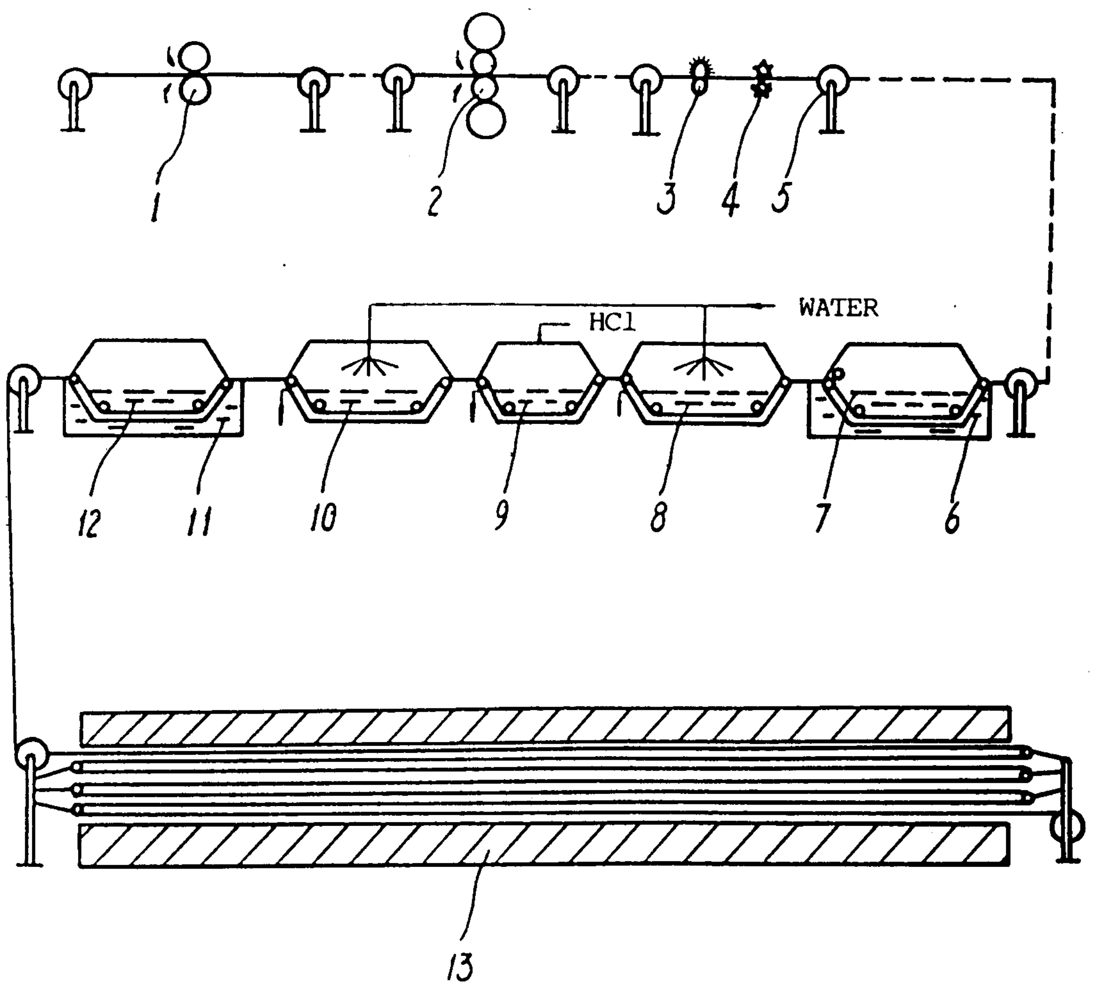


FIG. 1

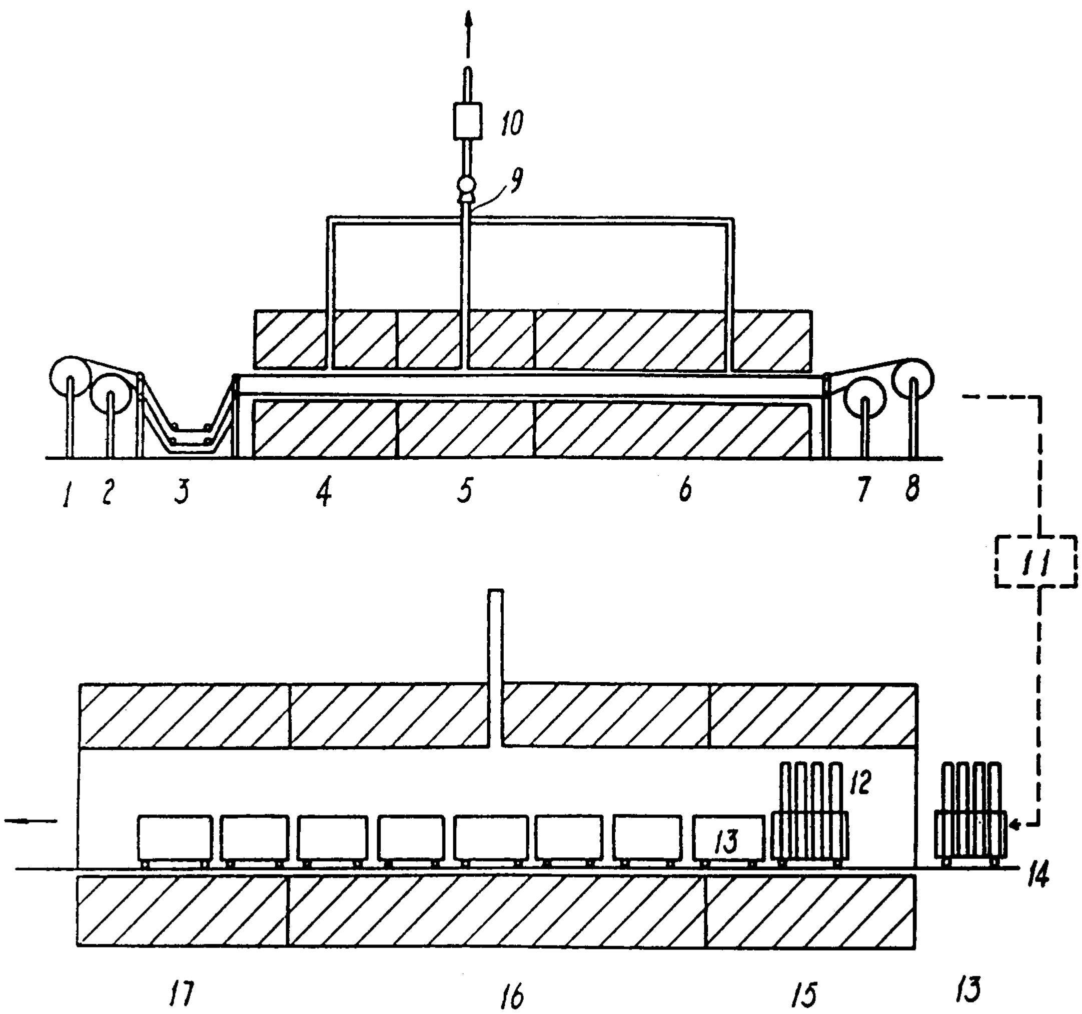


FIG, 2

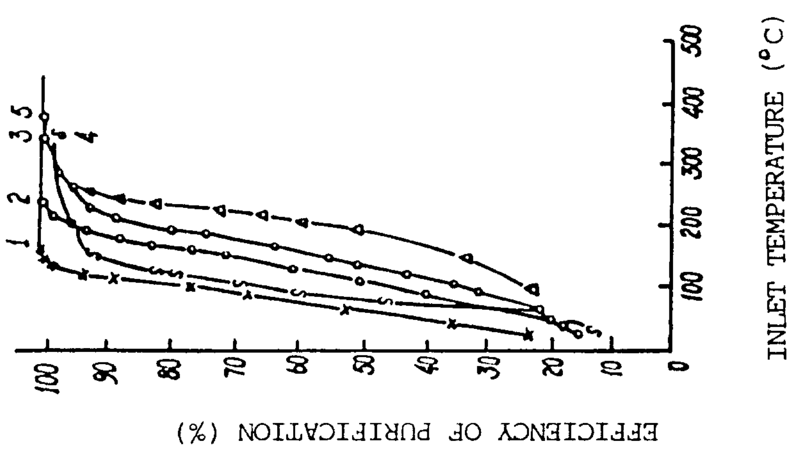


FIG. 3

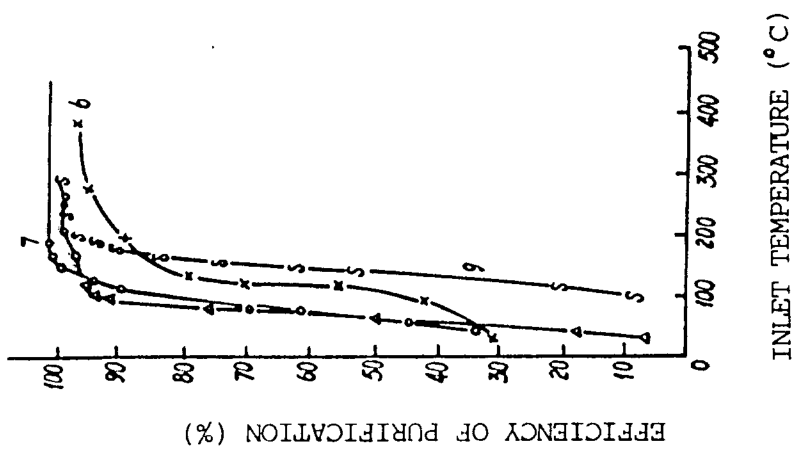


FIG. 4

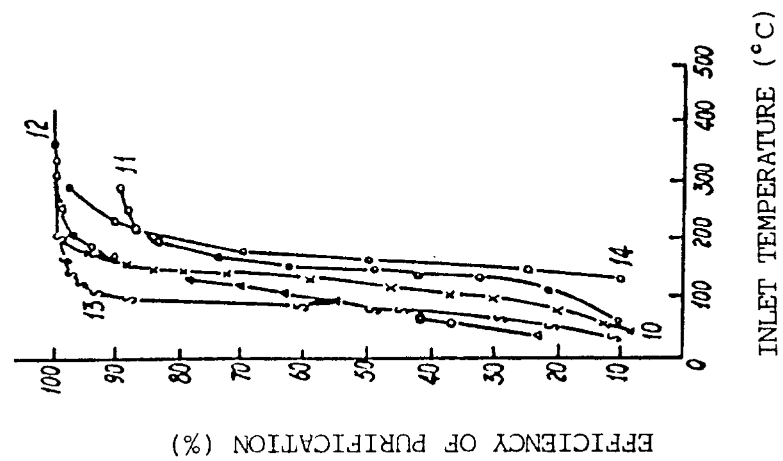


FIG. 5

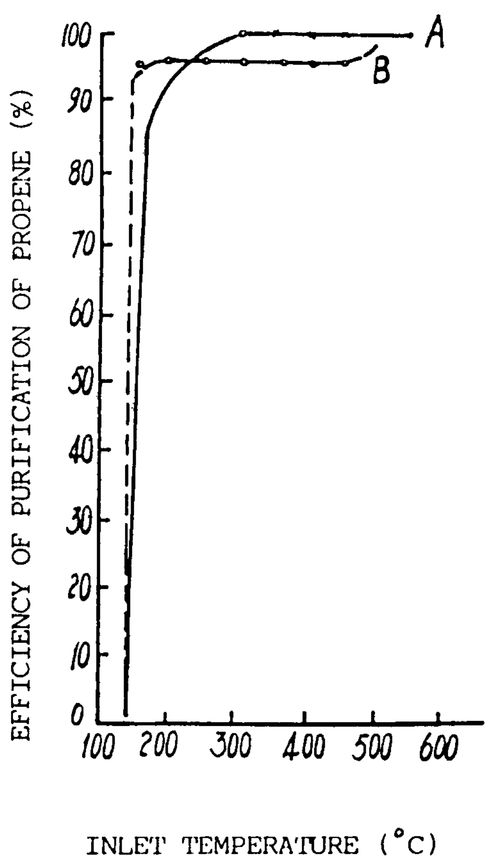
EFFICIENCY OF PURIFICATION OF PROPENE (%)
100
90
80
70
60
50
40
30
20
10
0
100
200
300
400
500
600
A
B
INLET TEMPERATURE (°C)

FIG. 6

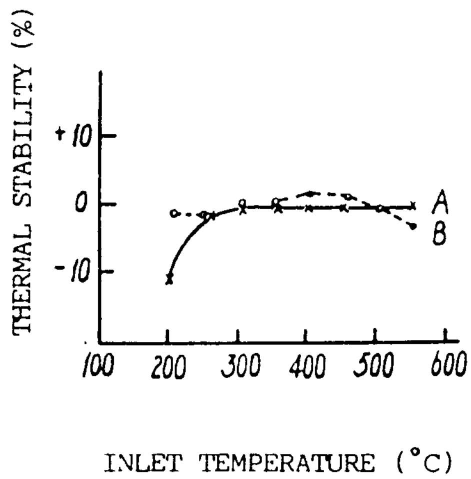
THERMAL STABILITY (%)
+10
0
-10
100
200
300
400
500
600
A
B
INLET TEMPERATURE (°C)

FIG. 7

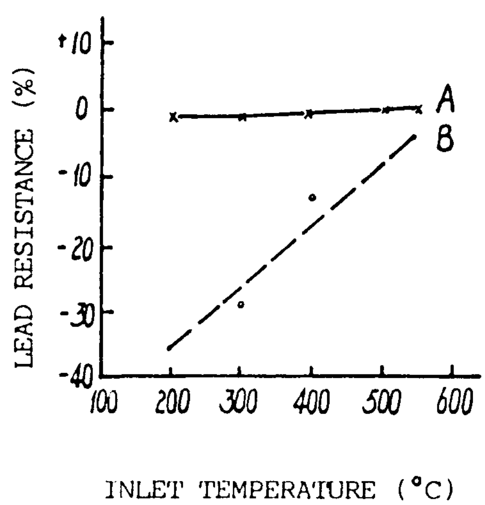
LEAD RESISTANCE (%)
+10
0
-10
-20
-30
-40
100
200
300
400
500
600
A
B
INLET TEMPERATURE (°C)

FIG. 8

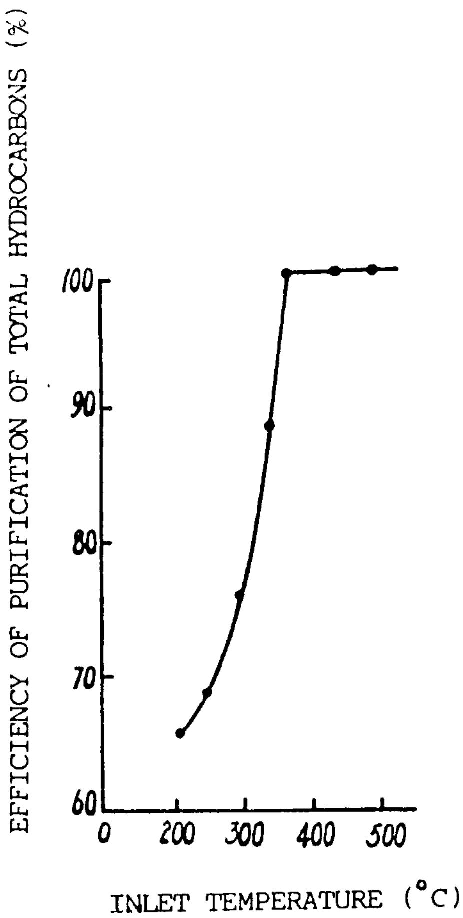
EFFICIENCY OF PURIFICATION OF TOTAL HYDROCARBONS (%)
100
90
80
70
60
0
200
300
400
500
INLET TEMPERATURE (°C)

FIG. 9